# EUROPÄISCHE PATENTANMELDUNG

(11) **EP 1 538 687 A2**
(43) Veröffentlichungstag der Anmeldung: **08.06.2005**
(21) Anmeldenummer: 04026524.1
(22) Anmeldetag: 09.11.2004
(51) Int. Cl.: H01M 4/66, H01M 4/02

(54) **Verfahren zur Herstellung eines Elektrode-Kollektor-Verbunds für Lithium-Zellen**

(30) Priorität: 10.11.2003 DE 10353309
(71) Anmelder: VARTA Microbattery GmbH, 30419 Hannover (DE)
(72) Erfinder: Haug, Peter, Dr., 73749 Ellwangen (DE); Wöhrle, Thomas, Dr., 73749 Ellwangen (DE); Birke, Peter, Dr., 73749 Ellwangen (DE); Hald, Rainer, 73749 Ellwangen (DE); Holl, Konrad, Dr., 73434 Aalen (DE); Ilic, Dejan, Dr., 73479 Ellwangen (DE)
(74) Vertreter: Patentanwälte Ruff, Wilhelm, Beier, Dauster & Partner

(57) **Zusammenfassung**

Bei der Herstellung eines positiven Elektrode-Kollektor-Verbundes für wiederaufladbare Lithium-Zellen in Stapeltechnologie werden durch ein naßchemisches Verfahren die Oxidschicht und andere Verunreinigungen vom aus Aluminium bestehenden Kollektor entfernt, und auf die so erhaltene oxidfreie Oberfläche wird die positive aktive Masse unmittelbar aufgebracht.

Das naßchemische Verfahren wird vorzugsweise im basischen Milieu durchgeführt, das Aufbringen des positiven Massefilms auf den vorbehandelten Kollektor erfolgt durch einen Laminations- und/oder einen Kalandrierungsprozeß.

Nach dem Verfahren hergestellte positive Elektroden werden in einem durch einen Laminationsprozeß hergestellten Verbund mit negativer Elektrode und Separator verwendet, der insbesondere in einem flexiblen Zellengehäuse aus Aluminiumverbundfolie angeordnet ist.

## Beschreibung

Gegenstand der Erfindung ist ein Verfahren zur Herstellung eines positiven Elektrode-Kollektor-Verbundes für wiederaufladbare Lithium-Zellen in Stapeltechnologie und die Verwendung dieser Elektroden.

In galvanischen Elementen bestimmt die elektrische Anbindung der Ableiterelektroden an die elektrochemisch aktiven Massen ganz maßgeblich die Funktionsfähigkeit der Zelle. Dekontaktierungen rein mechanischer Natur oder Impedanzerhöhungen, die durch den elektrochemischen Aufbau von Passivierungsschichten verursacht werden, zählen zu den häufigsten Gründen für ein Versagen der Zelle.

Für lithiuminterkalierende Elektroden sind die verschiedensten Ableitermaterialien bekannt. Bei der Herstellung von wiederaufladbaren Lithium-lonen- und Lithium-Polymer-Zellen wird als Ableitermaterial bzw. Kollektor für die positive aktive Masse vorzugsweise Aluminium verwendet. Der Anodenkollektor besteht üblicherweise aus Kupfer. Die Kollektoren werden insbesondere in Form von Streckmetallen, gestanzten Folien oder auch ungelochten Folien eingesetzt.

Bei Lithium-Zellen, die eine Vielzahl von übereinandergestapelten Elektroden mit Kollektoren und Separatoren enthalten, d. h., die in in Stapeltechnologie hergestellt werden, ist eine besonders gute Haftung zwischen den Kollektoren, Elektrodenfilmen und Separatoren Grundvoraussetzung für einwandfreie Funktion. Während bei Lithium-Ionen-Zellen in Wickeltechnologie der Elektroden-Separator-Verbund sich selbst stabilisiert, müssen bei Zellen in Stapeltechnologie die Einzelkomponenten durch einen Laminierungsprozeß, gegebenenfalls unter Druck und Temperatur, verklebt werden. Um eine gute Belastbarkeit der Zellen zu erreichen, muß der Übergangswiderstand zwischen Elektroden und Separator sowie Kollektor und Elektrodenfilm möglichst gering sein.

Aufgrund seiner leichten Oxidierbarkeit bildet frisches, blankes Aluminium sehr leicht und schnell nichtleitende und die Haftung verschlechternde Passivierungsschichten an der Oberfläche aus. Zusätzlich können durch die bei der Herstellung von Aluminiumfolie oder -streckmetall beim Walzprozeß verwendeten Öle Rückstände vorhanden sein, die ebenfalls die mechanische und elektrische Kontaktierung negativ beeinflussen. Beim Einsatz solcher Aluminiumkollektoren in Lithium-lonen- bzw. Lithium-Polymer-Zellen führt dies zu schlechter Haftung und sehr hohen Innenwiderständen bzw. Impedanzen.

Bei Verwendung von sehr frischem Aluminium erfordert die leichte Oxidierbarkeit des Aluminiums eine extrem schnelle Verarbeitung. Dies führt zu hohen Anforderungen an Produktion, Logistik und Lagerhaltung. Zusätzlich müssen die Kollektoren durch vorgeschaltete Reinigungsschritte von anhaftenden Verunreinigungen (z. B. Öle) befreit werden.

Das Dokument US 6,403,263 beschreibt das Aufbringen eines sogenannten Primers auf den aus Aluminium bestehenden Kathoden-Kollektor zur Verbesserung der Leitfähigkeit, wobei der Primerauftrag mit oder ohne vorgeschaltetes Ätzen erfolgen soll. Die Verwendung von Primern ist auch dem Dokument DE 100 30 571 A1 zu entnehmen.

Primer sind Haftvermittler und Leitfähigkeitsverbesserer und werden in sehr dünnen Schichten durch Sprüh- oder Tauch-Verfahren auf das Aluminium aufgebracht. Sie bestehen üblicherweise aus Bindemitteln und Leit-Rußen bzw. Leit-Graphiten. Nachteilig ist dabei, daß eine homogene Aufbringung sehr kompliziert ist. Zudem greifen diese Primer direkt in die Zellchemie ein und führen durch ihre Zersetzung sehr oft zur Gasung der Zelle. Insbesondere bei Zellen im Softpack, d. h., Zellen, die ein Gehäuse aus einem dünnen flexiblen Metall/Kunststoffverbund (meist Aluminiumverbundfolie) besitzen, ist dies vor allem bei Lagerung unter erhöhten Temperaturen ein gravierendes Problem.

Die Erfindung stellt sich demzufolge die Aufgabe, ein Verfahren bereitzustellen, durch das möglichst viele der geschilderten Probleme gelöst werden. Ein Hauptaugenmerk liegt dabei auf der Verbesserung der mechanischen Haftung zwischen dem Aluminium-Kollektor und der positiven aktiven Masse sowie der Verringerung des elektrischen Übergangswiderstands zwischen Kollektor und aktiver Masse.

Diese Aufgabe wird durch das Verfahren mit den Merkmalen des Anspruchs 1 gelöst. Bevorzugte Ausführungsformen dieses Verfahrens sind in den abhängigen Ansprüchen 2 bis 6 beschrieben. Der Elektrode-Kollektor-Verbund selbst und bevorzugte Verwendungen sind in den Ansprüchen 7 bzw. 8 bis 10 definiert. Der Wortlaut sämtlicher Ansprüche wird hiermit durch Bezugnahme zum Inhalt dieser Beschreibung gemacht.

Nach dem erfindungsgemäßen Verfahren werden die Oxidschicht und eventuell vorhandene Verunreinigungen (z. B. durch Prozeß-Öle) von der Oberfläches des Kollektors, der bevorzugt aus Aluminium-Streckmetall oder aus gelochter Folie besteht, entfernt. Der so erhaltene schmutzund oxidfreie Kollektor wird durch unmittelbare Auflaminierung und/oder durch Kalandrieren eines positiven Massefilms konserviert. Der Laminationsprozeß wird bevorzugt bei erhöhter Temperatur, insbesondere im Bereich zwischen 100 °C und 200 °C, durchgeführt. An den Laminationsprozeß kann sich gegebenenfalls zur weiteren Verdichtung der Elektrode ein zusätzlicher Kalandrierungsschritt anschließen. Auch direkte Kalandrierung ohne vorherigen Laminationsschritt ist bei ausreichender Haftung zwischen Kollektor und positiver Masse möglich.

Das erfindungsgemäße Verfahren ist besonders vorteilhaft bei der Herstellung wiederaufladbarer Lithium-Zellen in Stapeltechnologie. Durch diese Behandlung ergibt sich eine Verbesserung der Haftung innerhalb des Kollektor-Elektrodenfilm-Laminats, und es wird ein hochleitender elektrischer Kontakt zwischen Kollektor und Elektrodenfilm erzeugt, ohne den Einsatz von problematischen Haftvermittlern, die Bestandteile enthalten, welche sich bei Lagerung oder während des Betriebs der Zelle zersetzen können.

Die Entfernung der Oxidschicht und eventueller Verschmutzungen auf dem Aluminium-Kollektor erfolgt bevorzugt durch einen naßchemischen Vorgang. Die Durchführung des naßchemischen Vorgangs kann sowohl im alkalischen, als auch im sauren Milieu erfolgen.

Im alkalischen Milieu (z. B. 5 %ige wäßrige NaOH) verläuft die Reaktion nach folgendem Reaktionsmechanismus:

2 Al + 6 H₂O + 2 OH⁻ → 2 [Al(OH)₄]⁻ + 3 H₂

Das Aluminium wird unter Wasserstoffentwicklung oxidiert und als [Al(OH)₄]⁻ gelöst. Dies führt zur Auflösung und Absprengung der oberflächlich gebildeten Oxidschicht sowie zur Entfernung eventuell vorhandener Verschmutzungen, die eine gute mechanische und elektrische Anbindung des positiven Massefilms verhindern würden. Um ein weiteres Auflösen des Aluminiums zu verhindern, wird der Kollektor erst in destilliertem Wasser, dann in Aceton ausgewaschen und anschließend getrocknet.

Die Oberfläche des Aluminiumkollektors wird durch diese Vorbehandlung aufgerauht und weist polare Hydroxyd-Gruppen auf, wodurch eine optimale Haftung des Elektrodenfilms im nachgeschalteten Laminierungs- und/oder Kalandrierungsprozeß ermöglicht wird. Durch die unmittelbare Aufbringung des Elektrodenfilmes auf die schmutz- und oxidfreie Kollektoroberfläche wird dieser Zustand konserviert.

Soll das naßchemische Verfahren im sauren Milieu durchgeführt werden, wird beispielsweise eine Lösung von (NH₄)HF₂ in Schwefelsäure verwendet.

Nach dem erfindungsgemäßen Verfahren hergestellte positive Elektroden können in einem Folgeprozeß durch Lamination zu einem mehrschichtigen Verbund aus positiven Elektroden weiterverarbeitet werden. Der so erhaltene Elektroden-Kollektor-Verbund wird als positive Gesamtelektrode wiederum durch Lamination mit einer negativen Gesamtelektrode und einem Separator verbunden. Dieser Verbund wird durch Tränken mit einem flüssigen organischen Elektrolyten aktiviert.

Vor der Elektrolyttränkung wird der durch den Laminationsprozeß hergestellte Verbund aus positiver Elektrode, negativer Elektrode und Separator bevorzugt in einem flexiblen Zellengehäuse aus Aluminiumverbundfolie angeordnet.
Zellen, deren positive Elektroden nach dem erfindungsgemäßen Verfahren hergestellt wurden, zeigen zum einen optimale mechanische Haftung und zum anderen sehr guten elektrischen Kontakt zwischen Kollektor und Elektrodenfilm und dadurch bedingt den gewünschten niedrigen Innenwiderstand. Im Vergleich zu Zellen ohne Kollektorvorbehandlung ermöglicht dies insbesondere bei Pulsbelastung (z. B. Mobilfunk, GSM (Global System for Mobile Communication)-Standard) höhere Entladekapazitäten.

Bei erhöhter Temperatur wird keine Gasung der Zelle beobachtet, da unerwünschte Nebenreaktionen wie beim Einsatz von Haftvermittlern und Leitfähigkeitsverbesserern ausgeschlossen sind.

Weitere Merkmale der Erfindung ergeben sich aus den nachfolgenden Beispielen in Verbindung mit den Unteransprüchen. Hierbei können die dargestellten Merkmale und Eigenschaften jeweils für sich allein oder zu mehreren in Kombination miteinander verwirklicht sein.

### Beispiele

Im Beispiel wird der Al-Kollektor mit 5 %iger, wäßriger Natronlauge behandelt.

### Material:

- ca. 8 x 15 cm Al-Kollektorstreifen (Folie, gestanzte Folie oder Streckmetall)
- 1 Becherglas mit 5 %iger wäßriger NaOH
- 3 Bechergläser mit demineralisiertem Wasser
- 1 Becherglas mit Aceton
- einige Tropfen Phenolphthalein (Indikator auf Lauge)

### Aufbau:

Die Gläser werden in einer Reihe im Abzug aufgestellt.
1. Natronlauge
2./3./4. Demineralisiertes Wasser
5. Aceton

In das vierte Becherglas mit demineralisiertem Wasser werden einige Tropfen Phenolphthalein gegeben.

### Durchführung:

Der Al-Kollektor wird aufgerollt und mit Hilfe einer Kunstoffpinzette in die Natronlauge getaucht. Nach kurzer Zeit (ca. 2 Sekunden) bilden sich an dem Aluminium feine Wasserstoffbläschen, bis schließlich ein starkes Schäumen auftritt (ca. 10 Sekunden). Ab jetzt wird der Al-Kollektor weitere 15 Sekunden in der Natronlauge belassen (dies führt bei dem Al-Kollektor zu einer Massenabnahme von 1 - 2 %).
Der Al-Streifen wird aus der Natronlauge herausgezogen und dreimal in den Bechergläsern mit demineralisiertem Wasser ausgespült. Durch das Phenolphthalein im 4. Becherglas wird das erfolgreiche Auswaschen überprüft.
Im letzten Schritt wird der Kollektor in Aceton getunkt und dann an Luft für ca. 5 min. getrocknet.
Der so behandelte Al-Kollektor ist nun von Verschmutzungen befreit und weitgehendst oxidfrei (stark glänzend). Damit sich nicht erneut eine Oxidschicht auf der Al-Kollektoroberfläche bildet, werden nun unmittelbar anschließend beidseitig Kathodenfilme unter Temperaturund Druckeinwirkung auflaminiert und/oder kalandriert.

### Vergleich von Li-Polymerzellen mit unterschiedlich behandeltem Al-Kollektor:

### Material:

A.) Li-Polymerzellen mit geprimerten, ca. 40 µm dicken Aluminium-Streckmetall-Kollektoren, wobei der Primer aus einem organischen Haftvermittler und einem Gemisch aus einem Leitruß und Leitgraphit besteht.
B.) Li-Polymerzellen mit blanken, ungeätzten, ca. 40 µm dicken Al-Streckmetall-Kollektoren.
C.) Li-Polymerzellen mit blanken, geätzten, ca. 40 µm dicken Al-Streckmetall-Kollektoren, nach obigem Verfahren geätzt.

Mit diesen drei verschiedenen Al-Kollektoren wurden Li-Polymerzellen nach einem Verfahren hergestellt, wie es beispielsweise dem Dokument EP 1 235 286 A2 zu entnehmen ist.

Ähnliche Verfahren sind im Dokument J.-M. Tarascon et al.; Performance of Bellcore's plastic rechargeable Li-ion batteries; Solid State lonics 86-88 (1996) 49-54 beschrieben.

Als elektrochemisch aktives Material für eine positive Elektrodenfolie wird ein Material aus der Gruppe ternärer (Li-Me1-O) oder quaternärer (Li-Me1-Me2-O) Lithiumübergangsmetalloxide verwendet, wobei Me1 und Me2 aus einer Gruppe mit Ti, V, Cr, Fe, Mn, Ni, Co ausgewählt sind. Die Verbindung enthält gegebenenfalls zusätzlich bis zu 15 Atom-Prozent Mg, Al, N oder F zur Stabilisierung der Struktur. Als elektrochemisch aktives Material für die negative Elektrodenfolie wird beispielsweise eine graphitisierte Kohlenstoffmodifikation verwendet.

Es können auch Verfahren zur Herstellung von Elektrodenfolien verwendet werden, bei denen ein PVDF-HFP-Copolymer (Polyvinylidenfluorid-Hexafluorpropylen-Copolymer) in einem Lösungsmittel gelöst, mit einem hochleitfähigen Ruß, dessen spezifische Oberfläche (bestimmt nach BET) zwischen der von oberflächenminimiertem Graphit und aktiviertem Kohlenstoff liegt, und mit einem elektrochemisch aktiven Material mit einer zweidimensionalen Schichtstruktur und einer elektronischen Leitfähigkeit von mindestens 10⁻⁴ S/cm, in welches Lithium reversibel ein- und ausbaubar ist, vermischt wird. Die so erhaltene pastöse Masse wird auf den Kollektor aufgebracht und getrocknet.

Diese die unterschiedlich behandelten positiven Kollektoren enthaltenden Zellen wurden elektrisch durch Impedanzmessung und GSM-Zyklisierungen charakterisiert und zudem im vollgeladenen Zustand im Temperaturschrank gelagert (4,2 V / 80 °C / 10 h).

Ergebnisse der Impedanzmessung (1 kHz / 3,9 V):
- geprimerter Al-Kollektor (A): 65 - 70 mOhm
- ungeätzter Al-Kollektor (ohne Primer) (B): 100 - 110 mOhm
- geätzter Al-Kollektor (ohne Primer) (C): 70 - 80 mOhm

Die Impedanzmessung gibt den inneren Wechselstromwiderstand einer Zelle an. Hierbei ist ein möglichst geringer Widerstand wünschenswert. Es zeigt sich, daß die Zelle mit ungeätztem Al-Kollektor einen wesentlich höheren Innenwiderstand hat als die beiden anderen.

Die vollgeladenen Zellen sollten möglichst lange bei erhöhten Temperaturen lagerfähig sein, ohne daß Gasung auftritt. Bei einer Lagerung bei 4,2 V / 80 °C über 10 h zeigte sich bei der Zelle mit geprimertem Al-Kollektor eine starke Gasung, die sich in einer erheblichen Ausbeulung des flexiblen Zellengehäuses äußert, während bei der Zelle mit geätztem Al-Kollektor keine Gasung erfolgt.
Die GSM-Zyklisierung ist eine spezielle Entladungsform im Mobilfunksektor. Hierbei wird eine Zelle pulsförmig mit einer Periodendauer von 4,6 ms entladen (z. B.: 4,05 ms 0,08 A Grundstrom und 0,55 ms 2,0 A Puls).

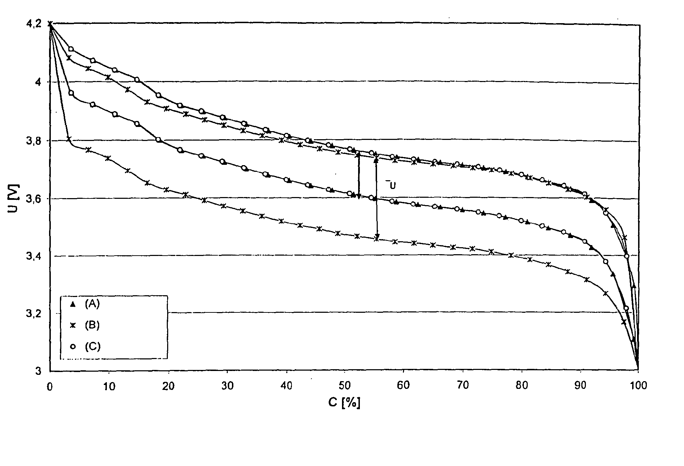

In der Zeichnung ist die GSM-Entladungskurve aller drei Zellen während des 5. Zyklus dargestellt. Aufgetragen ist der Verlauf der Spannung U (in Volt) gegen die Kapazität C (in %). Alle drei Zellen wurden mit 1 C für 3 h geladen (Laden mit 1 C bedeutet z. B. bei einer 1,2 Ah-Zelle mit 1,2 A), die GSM-Entladung erfolgte bis 3,0 V).

Die drei oberen Hüllkurven zeigen die Spannungsverläufe bei der Grundstrombelastung von 0,08 A, die drei unteren bei einer Pulsbelastung von 2,0 A. Zudem ist jeweils bei den drei Zellen die durch den 2 A Puls bedingte Aufspaltung der Spannung bei ca. 50 % der Kapazität mit Hilfe eines Doppelpfeils gekennzeichnet (Δ U). Deutlich ist erkennbar, daß die Aufspaltung (Δ U) bei den geprimerten (A, volle Dreiecke) bzw. geätzten (C, leere Kreise) Aluminium-Kollektoren wesentlich geringer ist, als bei dem ungeätzten Al-Kollektor (B, Sterne).

Für eine gute Pulsbelastbarkeit und somit hohe Entladekapazität muß dieser Δ U - Spannungsabfall möglichst klein sein.

Die hier aufgeführten Ergebnisse zeigen den großen Vorteil von geätzten Al-Kollektoren gegenüber den geprimerten (Gasung bei 4,2 V / 80 °C) bzw. den ungeätzten (hohe Impedanz / großes Δ U) Al-Kollektoren.

## Patentansprüche

1. Verfahren zur Herstellung eines positiven Elektrode-Kollektor-Verbundes für wiederaufladbare Lithium-Zellen in Stapeltechnologie, **dadurch gekennzeichnet, daß** eine vorhandene Oxidschicht und eventuell vorhandene andere Verunreinigungen, vorzugsweise durch ein naßchemisches Verfahren, vom aus Aluminium bestehenden Kollektor entfernt und auf die so erhaltene oxidfreie Oberfläche die positive aktive Masse unmittelbar aufgebracht wird.

2. Verfahren nach Anspruch 1, **dadurch gekennzeichnet, daß** das naßchemische Verfahren im basischen Milieu, bevorzugt in wäßrigem Alkali durchgeführt wird.

3. Verfahren nach Anspruch 1 oder 2, **dadurch gekennzeichnet, daß** das Aufbringen des positiven Massefilms auf den vorbehandelten Kollektor durch einen Laminationsprozeß erfolgt.

4. Verfahren nach Anspruch 3, **dadurch gekennzeichnet, daß** der Laminationsprozeß bei erhöhter Temperatur, vorzugsweise im Bereich von 100 °C bis 200 °C, durchgeführt wird.

5. Verfahren nach Anspruch 3 oder 4, **dadurch gekennzeichnet, daß** dem Laminationsprozeß mindestens ein Kalandrierungsschritt nachgeschaltet ist.

6. Verfahren nach einem der vorhergehenden Ansprüche, **dadurch gekennzeichnet, daß** der Kollektor aus Aluminium- Streckmetall besteht.

7. Elektrode-Kollektor-Verbund für wiederaufladbare Lithium-Zellen in Stapeltechnologie, herstellbar nach einem Verfahren nach einem der vorhergehenden Ansprüche.

8. Verwendung einer nach dem Verfahren gemäß einem der Ansprüche 1 bis 7 hergestellten positiven Elektrode, vorzugsweise des Elektrode-Kollektor-Verbunds nach Anspruch 7, in einem durch einen Laminationsprozeß hergestellten Verbund mit negativer Elektrode und Separator.

9. Verwendung nach Anspruch 8, **dadurch gekennzeichnet, daß** der Verbund aus positiver Elektrode, negativer Elektrode und Separator in einem flexiblen Zellengehäuse aus Aluminiumverbundfolie angeordnet ist.

10. Verwendung nach Anspruch 8 oder 9, **dadurch gekennzeichnet, daß** der Verbund mit einem flüssigen organischen Lithiumelektrolyten getränkt ist.
